(19) Europäisches Patentamt
European Patent Office
Office européen des brevets

(11) **EP 4 087 728 B1**

(12) **EUROPEAN PATENT SPECIFICATION**

(45) Date of publication and mention
of the grant of the patent:
**22.07.2026 Bulletin 2026/30**

(21) Application number: **21700088.4**

(22) Date of filing: **06.01.2021**

(51) International Patent Classification (IPC):
**B32B 1/08** *(2006.01)*  **B32B 27/08** *(2006.01)*
**B32B 27/36** *(2006.01)*  **B32B 27/30** *(2006.01)*
**E04G 23/02** *(2006.01)*  **F16L 11/22** *(2006.01)*
**F16L 9/19** *(2006.01)*

(52) Cooperative Patent Classification (CPC):
**B32B 1/08; B32B 27/08; B32B 27/306;**
**B32B 27/36; F16L 9/19; F16L 11/042; F16L 11/22;**
B32B 2250/24; B32B 2250/244; B32B 2307/31;
B32B 2307/518; B32B 2307/732; B32B 2597/00;
F16L 9/17

(86) International application number:
**PCT/IB2021/050063**

(87) International publication number:
**WO 2021/140444 (15.07.2021 Gazette 2021/28)**

(54) **POLYMERIC FILM TUBE**

SCHLAUCH AUS POLYMERFOLIE

TUBE DE FILM POLYMÈRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **06.01.2020 GB 202000114**

(43) Date of publication of application:
**16.11.2022 Bulletin 2022/46**

(73) Proprietor: **Mylar Specialty Films U.S. Limited**
**Partnership**
**Chester, VA 23836 (US)**

(72) Inventor: **DENG, Fenghua**
**Chester, VA 23836 (US)**

(74) Representative: **Carpmaels & Ransford LLP**
**One Southampton Row**
**London WC1B 5HA (GB)**

(56) References cited:
**DE-A1- 3 837 121    FR-A1- 2 707 320**

## Description

The present invention is directed to a polymeric film tube and a method of making the same. The invention further relates to a kit comprising a plurality of polymeric films for forming a polymeric film tube. The polymeric film tube is of particular utility in the delivery of injectable chemicals, for instance in mining and construction applications.

Tubes made from polymeric films are used in many industrial applications. For instance, polymeric film tubes may be injected with chemicals in order to strengthen the walls of a borehole, such as a borehole in a mining operation, or the walls of a pipeline, shaft or tunnel. The use of such polymeric tubes to deliver injectable chemicals can be used to anchor, consolidate and control gases, water and strata in subterranean locations, for instance to consolidate fractured strata and/or prevent the ingress of water. As well as ground stabilisation, the technology may be used in renovation and construction projects, for instance to repair or fill cavities or fissures in a structure. A variety of injectable chemicals are used for this purpose including polyurethane, silicate and phenolic-based resin systems.

A polymeric film which is heat-sealable on both surfaces thereof may be used to form a tubular structure by heat-sealing the first heat-sealable surface to the second heat-sealable surface in an overlap seal arrangement along the seam of the tube. However, a polymeric film having two heat-sealable surfaces is more technically challenging and expensive to manufacture, and may present process difficulties in the manufacture of the tube due to potential jaw sticking. An alternative structure uses a polymeric film having one heat-sealable surface and one non-heat-sealable surface, and forming an overlap seal by modifying the non-heat-sealable surface via pre-swelling using solvent, and sealing or welding the films together at relatively higher temperatures (typically referred to as high-temperature solvent welding). A further alternative structure uses a polymeric film having no heat-sealable surfaces, and forming an overlap seal by pre-swelling using solvent, and welding the films together at high temperatures. However, the disadvantage of these alternative structures is a lack of consistency in the integrity of the seal along the length of the seam, as well as deformation of the plastic film as a result of the higher sealing temperature, and a slower and more costly production of the tube.

It would be desirable to address one or more of these problems and provide a polymeric film tube which is efficient and economic to manufacture and use, and which exhibits excellent seal integrity along the length of the seal, and preferably also avoidance of deformation.

In the following description, the pressure unit psi should be converted to the SI unit pascal by multiplying by 6,894.76.

DE3837121A1 describes an injection hose or tube, having a hose-like or tube-like carrier which forms at least one duct and is provided in its wall with a multiplicity of through-passage openings, and having a sheathing which encloses the carrier on its outer surface and, there, covers the openings.

According to a **first** aspect, there is disclosed a tube comprising a first channel which extends along the longitudinal axis of said tube wherein:

(i) said tube is constituted by a first heat-sealable polymeric film A and a second heat-sealable polymeric film B,
(ii) said polymeric film A has a first surface A1 and a second heat-sealable surface A2,
(iii) said polymeric film B has a first surface B1 and a second heat-sealable surface B2,
(iv) said polymeric film A comprises edges A-a and A-b and said polymeric film B comprises edges B-a and B-b, wherein said edges A-a, A-b, B-a and B-b extend along the longitudinal axis of the tube,
(v) said polymeric films A and B are disposed such that said heat-sealable surfaces A2 and B2 are in contact with and adhered to each other by heat-seal bonds which do not extend across the full surface area of at least one of said heat-sealable surfaces A2 and B2 (preferably wherein said at least one heat-sealable surface is at least heat-sealable surface B2), and
(vi) polymeric film A is adhered to polymeric film B by first and second overlap heat-seal bonds (HSB1 and HSB2) to define said tube and said first channel thereof.

The tube of the first aspect is used in the method of delivering one or more injectable chemicals to a predetermined location within a structure, as defined by appended claim 16.

According to a **second** aspect of the invention, there is provided a tube according to the first aspect comprising a first channel and a second channel wherein each of said first and second channels extends along the longitudinal axis of said tube, and wherein:

(i) said tube is constituted by a first heat-sealable polymeric film A and a second heat-sealable polymeric film B,
(ii) said polymeric film A has a first surface A1 and a second heat-sealable surface A2,
(iii) said polymeric film B has a first surface B1 and a second heat-sealable surface B2,
(iv) said polymeric film A comprises edges A-a and A-b and said polymeric film B comprises edges B-a and B-b, wherein said edges A-a, A-b, B-a and B-b extend along the longitudinal axis of the tube,
(v) said polymeric films A and B are disposed such that said heat-sealable surfaces A2 and B2 are in contact with and adhered to each other by heat-seal bonds which do not extend across the full surface area of said heat-sealable surfaces A2 and B2,

(vi) polymeric film A is adhered to polymeric film B by first and second overlap heat-seal bonds (HSB1 and HSB2) to define said tube and said first channel thereof, and

(vii) polymeric film A is further adhered to polymeric film B by a third heat-seal bond (HSB3) between said heat-sealable surfaces A2 and B2 such that said third heat-seal bond defines a second channel comprising first and second walls which extend along the longitudinal axis of said tube.

The tube of the second aspect of the invention is of particular utility for the delivery of a dual-component injectable chemical system, wherein the two components are required to remain separate until their point of application, at which point the components are contacted in order to undergo a chemical reaction to provide the desired compound at a pre-determined location. Such injectable chemical systems include, for instance, two component polyurethane or silicate resin systems.

Advantageously, the first surface A1 of polymeric film A and the first surface B1 of polymeric film B are not heat-sealable.

Preferably, polymeric film A and polymeric B are selected from composite films comprising a polymeric base layer and a polymeric heat-sealable layer. Said base layer suitably constitutes said non-heat-sealable surface of the polymeric film. Preferably the heat-sealable layer is disposed directly on the base layer, i.e. without any intervening layer.

As used herein, the term "heat-sealable surface" refers to the ability to form a heat-seal bond by contacting two surfaces at a temperature of no more than 200°C (and preferably within the range of 100 to 200°C) and a pressure of no more than 100 psi (and preferably within the range of 10 to 60 psi) for a time of no more than one minute (and preferably within the range of 0.5 to 30 seconds) wherein the resulting heat-seal bond strength is at least 10 g/mm (preferably at least 20 g/mm, preferably at least 30 g/mm). The term "non-heat-sealable surface", as used herein, refers to a surface which does not have that ability.

The polymeric films A and B are each self-supporting films or sheets by which is meant a film or sheet capable of independent existence in the absence of a supporting substrate.

Said base layer may be formed from any suitable film-forming polymeric material. Thermoplastic polymeric materials are preferred. Such materials include a homopolymer or copolymer of a 1-olefin, such as ethylene, propylene and but-1-ene, a polyamide, a polycarbonate, PVC, PVA, polyacrylates, celluloses and a polyester. Polyolefins, polyamides and polyesters, particularly polyesters, are preferred. The base layer should be a self-supporting film or sheet.

The base layer is preferably uniaxially or biaxially oriented, preferably biaxially oriented.

It will be appreciated from the disclosure hereinbelow that the base layer may be described as semi-crystalline. As used herein, the term "semi-crystalline" refers to a film which exhibits a crystallinity of at least 5%, preferably at least 10%, preferably at least 15%, preferably at least 20%, preferably at least 25%, and typically no higher than 50% or 45% or 40%.

Thus, the base layer is preferably formed from a film-forming thermoplastic polyester material. Synthetic linear polyesters are preferred. It will be appreciated that the base layer polyester is crystallisable. Suitable polyesters include those derived from one or more dicarboxylic acids, such as terephthalic acid, isophthalic acid, phthalic acid, 2,5-, 2,6- or 2,7-naphthalenedicarboxylic acid, 4,4'-diphenyldicarboxylic acid, hexahydro-terephthalic acid, 1,10-decanedicarboxylic acid, and in particular aliphatic dicarboxylic acids including those of the general formula $CnH2n(COOH)2$ wherein n is 2 to 8, such as succinic acid, glutaric acid sebacic acid, adipic acid, azelaic acid, suberic acid or pimelic acid; and from one or more glycols, particularly an aliphatic or cycloaliphatic glycol, such as ethylene glycol, 1,3-propanediol, 1,4-butanediol, neopentyl glycol and 1,4-cyclohexanedimethanol (CHDM).

The dicarboxylic acid component of the base layer polyester preferably comprises at least one aromatic dicarboxylic acid (which is preferably selected from terephthalic acid and 2,6-naphthalenedicarboxylic acid, and preferably terephthalic acid), and optionally further comprises a second, different dicarboxylic acid preferably selected from the dicarboxylic acids noted above, and preferably from an aromatic dicarboxylic acid (particularly isophthalic acid) and the aliphatic diacids noted above. Thus, the polyester is preferably derived from an aromatic dicarboxylic acid, preferably terephthalic acid or 2,6-naphthalenedicarboxylic acid, preferably terephthalic acid. Preferably, the dicarboxylic acid component of the base layer polyester contains only one aromatic dicarboxylic acid, which is preferably terephthalic acid or 2,6-naphthalenedicarboxylic acid, and is preferably terephthalic acid.

The glycol component of the base layer polyester preferably comprises at least one aliphatic diol, at least one of which is ethylene glycol. Preferably, the glycol component of the base layer polyester is an aliphatic diol, preferably ethylene glycol.

A preferred base layer polyester is selected from polyethylene terephthalate (PET) and polyethylene naphthalate (PEN), or a PET-based or PEN-based copolyester. Polyethylene terephthalate (PET) or a copolyester thereof is particularly preferred. Preferably the base layer polyester is PET.

The film-forming polymeric resin is the major component of the base layer, and makes up at least 70% by weight of the total weight of the base layer, preferably at least 80%, preferably at least 85%, preferably at least 90%, preferably at least 95%, more typically at least 98%, more typically at least 99% by weight of the total weight of the base layer.

The intrinsic viscosity of the polyester from which the base layer is manufactured is preferably at least about 0.60, preferably at least about 0.61, preferably at least 0.62, preferably at least 0.63, preferably at least 0.64, preferably at least 0.65, preferably at least about 0.70, preferably at least about 0.75. Preferably, the intrinsic viscosity of the base layer polyester is not more than 0.85, preferably not more than 0.83. The use of polyesters with too high a viscosity can lead to difficulties in film manufacture and/or require specialised, more robust film-forming equipment. For instance, increasing the viscosity too greatly may mean that it is appropriate to reduce output (i.e. reduce the amount of polyester extruded per unit time, which leads to a less economical process) or to increase the extrusion temperature in order to reduce the viscosity of the melt (which in turn can lead to thermal degradation of the polymer and the loss of associated properties) in order to achieve stable film production.

Formation of the polyesters is conveniently effected in a known manner by condensation or ester interchange, generally at temperatures up to about 295°C. In a preferred embodiment, solid state polymerisation may be used to increase the intrinsic viscosity of the polyesters to the desired value, using conventional techniques well-known in the art, for instance using a fluidised bed such as a nitrogen fluidised bed or a vacuum fluidised bed using a rotary vacuum drier.

The base layer may further comprise any other additive conventionally employed in the manufacture of polymeric films, and particularly polyester films. Thus, agents such as particulate fillers, hydrolysis stabilisers, anti-oxidants, UV-stabilisers, cross-linking agents, dyes, lubricants, radical scavengers, thermal stabilisers, surface active agents, gloss improvers, prodegradents, viscosity modifiers and dispersion stabilisers may be incorporated as appropriate. Of particular utility are particulate fillers, hydrolysis stabilisers (for instance glycidyl esters of branched monocarboxylic acids) and anti-oxidants (for instance hindered phenols, secondary aromatic amines and hindered amines), and suitable additives in this regard are disclosed in WO-2012/120260-A. UV-stabilisers are also of particular utility.

Particulate fillers can improve handling and windability during manufacture and/or modulate optical properties, as is well known in the art. The particulate filler is typically a particulate inorganic filler (e.g. metal or metalloid oxides, such as alumina, titania, talc and silica (especially precipitated or diatomaceous silica and silica gels), calcined china clay and alkaline metal salts, such as the carbonates and sulphates of calcium and barium). A particulate inorganic filler is preferably finely-divided, and the volume distributed median particle diameter (equivalent spherical diameter corresponding to 50% of the volume of all the particles, read on the cumulative distribution curve relating volume % to the diameter of the particles - often referred to as the "D(v,0.5)" value) thereof is preferably in the range from 0.01 to 5 $\mu$m, more preferably 0.05 to 1.5 $\mu$m, and particularly 0.15 to 1.2 $\mu$m. Preferably at least 90%, more preferably at least 95% by volume of the inorganic filler particles are within the range of the volume distributed median particle diameter $\pm$ 0.8 $\mu$m, and particularly $\pm$ 0.5 $\mu$m. Particle size of the filler particles may be measured by electron microscope, coulter counter, sedimentation analysis and static or dynamic light scattering. Techniques based on laser light diffraction are preferred. The aforementioned conventionally employed additives may be introduced into the polymer in a conventional manner. For example, by mixing with the monomeric reactants from which the film-forming polymer is derived, or the components may be mixed with the polymer by tumble or dry blending or by compounding in an extruder, followed by cooling and, usually, comminution into granules or chips. Masterbatching technology may also be employed.

The heat-sealable layer is capable of forming a heat-seal bond to the base layer. The polymeric material of the heat-sealable layer is capable of softening to a sufficient extent on heating that its viscosity becomes low enough to allow adequate wetting for it to adhere to the surface to which it is being bonded.

The heat-sealable layer may be formed from any suitable film-forming polymeric material. Thermoplastic polymeric materials are preferred, and include polyolefins, polyamides and polyesters. Polyesters are preferred, particularly a copolyester derived from one or more of the dicarboxylic acid(s) or their lower alkyl diesters with one or more of the glycol(s) referred to hereinabove.

Preferably, said heat-sealable layer is formed from a copolyester derived from at least 3 monomeric repeating units, at least one of which is an aromatic dicarboxylic acid, and at least one of which is an aliphatic diol.

In a first preferred embodiment, hereinafter referred to as Embodiment B1, the heat-sealable layer is formed from a copolyester derived from an aliphatic glycol and at least two aromatic dicarboxylic acids, preferably terephthalic acid and a second aromatic dicarboxylic acid, preferably isophthalic acid. A preferred copolyester is derived from ethylene glycol, terephthalic acid and isophthalic acid. The preferred molar ratios of the terephthalic acid component to the isophthalic acid component are in the range of from 50:50 to 90:10, preferably in the range from 65:35 to 85:15.

In a particularly preferred embodiment, this copolyester is a copolyester of ethylene glycol with about 82 mole % terephthalate and about 18 mole % isophthalate.

In a second preferred embodiment, hereinafter referred to as Embodiment B2, the heat-sealable layer is formed from a copolyester derived from an aliphatic diol and a cycloaliphatic diol with one or more, preferably one, dicarboxylic acid(s), preferably an aromatic dicarboxylic acid. Examples include copolyesters of terephthalic acid with an aliphatic diol and a cycloaliphatic diol, especially ethylene glycol and 1,4-cyclohexanedimethanol. The preferred molar ratios of the cycloaliphatic diol to the aliphatic diol are in the range from 10:90 to 60:40, preferably in the range from 20:80 to 40:60, and more preferably from 30:70 to 35:65. In a preferred embodiment this copolyester is a copolyester of terephthalic acid with about 33 mole % 1,4-cyclohexane dimethanol and about 67 mole % ethylene glycol. An example of such a polymer is PETG™6763 (Eastman) which comprises a copolyester of terephthalic acid, about 33% 1,4-cyclohexane dimethanol and about 67% ethylene glycol and which is always amorphous.

In a third preferred embodiment, hereinafter referred to as Embodiment B3, the heat-sealable layer is formed from a copolyester derived from an aromatic dicarboxylic acid and an aliphatic dicarboxylic acid, particularly those of the general formula $C_nH_{2n}(COOH)_2$ wherein n is 2 to 8. A preferred aromatic dicarboxylic acid is terephthalic acid. Preferred aliphatic dicarboxylic acids are selected from sebacic acid, adipic acid and azelaic acid. The concentration of the aromatic dicarboxylic acid present in the copolyester is preferably in the range from 45 to 80, more preferably 50 to 70, and particularly 55 to 65 mole % based on the dicarboxylic acid components of the copolyester. The concentration of the aliphatic dicarboxylic acid present in the copolyester is preferably in the range from 20 to 55, more preferably 30 to 50, and particularly 35 to 45 mole % based on the dicarboxylic acid components of the copolyester. Particularly preferred examples of such copolyesters are (i) copolyesters of azeleic acid and terephthalic acid with an aliphatic glycol, preferably ethylene glycol; (ii) copolyesters of adipic acid and terephthalic acid with an aliphatic glycol, preferably ethylene glycol; and (iii) copolyesters of sebacic acid and terephthalic acid with an aliphatic glycol, preferably butylene glycol. Preferred polymers include a copolyester of sebacic acid/terephthalic acid/butylene glycol (preferably having the components in the relative molar ratios of 45-55/55-45/100, more preferably 50/50/100) having a glass transition point ($T_g$) of -40°C and a melting point ($T_m$) of 117°C), and a copolyester of azeleic acid/terephthalic acid/ethylene glycol (preferably having the components in the relative molar ratios of 40-50/60-50/100, more preferably 45/55/100) having a $T_g$ of -15°C and a $T_m$ of 150°C.

In a fourth preferred embodiment, hereinafter referred to as Embodiment B4, the additional heat-sealable layer is formed from ethylene vinyl acetate (EVA). Suitable EVA polymers may be obtained from DuPont as Elvax™ resins. Typically, these resins have a vinyl acetate content in the range of 9% to 40%, and typically 15% to 30%.

Embodiment B1 is a particularly preferred embodiment for the heat-sealable layer.

The film-forming polymeric resin is the major component of the heat-sealable layer, and makes up at least 70% by weight of the total weight of the base layer, preferably at least 80%, preferably at least 85%, preferably at least 90%, preferably at least 95%, more typically at least 98%, more typically at least 99% by weight of the total weight of the heat-sealable layer. The heat-sealable layer may further comprise any other additive conventionally employed in the manufacture of polymeric films, and in particular polyester films, as described hereinabove. In particular, the heat-sealable layer preferably comprises a slip-aid or anti-blocking agent, such as a particulate filler or the like, which improves the handling of the film, as is conventional in the art of sealant coatings. Such components are present in relatively minor amounts, typically less than 5.0 wt%, typically less than 2.0 wt%, typically less than 1.0 wt%.

Formation of the composite film may be effected by conventional techniques well-known in the art. Conveniently, formation of the substrate is effected by extrusion, in accordance with the procedure described below.

In general terms the process comprises the steps of extruding a layer of molten polymer at a temperature within the range of from about 275 to about 300°C, preferably from about 290 to 295°C, quenching the extrudate and orienting the quenched extrudate in at least one direction. The film may be uniaxially oriented, but is preferably biaxially oriented by drawing in two mutually perpendicular directions in the plane of the film to achieve a satisfactory combination of mechanical and physical properties. Orientation may be effected by any process known in the art for producing an oriented film, for example a tubular or flat film process. Biaxial orientation is effected by drawing in two mutually perpendicular directions in the plane of the film to achieve a satisfactory combination of mechanical and physical properties. In a tubular process, simultaneous biaxial orientation may be effected by extruding a thermoplastics polymer tube which is subsequently quenched, reheated and then expanded by internal gas pressure to induce transverse orientation, and withdrawn at a rate which will induce longitudinal orientation. Suitable simultaneous biaxial orientation processes are disclosed in EP-2108673-A and US-2009/0117362-A1.

In the preferred flat film process, the film-forming polymer is extruded through a slot die and rapidly quenched upon a chilled casting drum to ensure that the polymer is quenched to the amorphous state. Orientation is then effected by stretching the quenched extrudate in at least one direction at a temperature above the glass transition temperature of the polyester. Sequential orientation may be effected by stretching a flat, quenched extrudate firstly in one direction, usually the longitudinal direction, i.e. the forward direction through the film stretching machine, and then in the transverse direction. Forward stretching of the extrudate is conveniently effected over a set of rotating rolls or between two pairs of nip rolls, transverse stretching then being effected in a stenter apparatus.

Stretching is generally effected so that the dimension of the oriented film is from 2 to 5, more preferably 2.5 to 4.5 times its original dimension in the or each direction of stretching. More preferably, stretching is effect so that the dimension of the oriented film is from 3.0 to 3.3 times its original dimension in the forward draw, and from 3.3 to 3.9 times its original dimension in the sideways draw. Greater draw ratios (for example, up to about 8 times) may be used if orientation in only one direction is required. Stretching is conventionally effected at temperatures higher than the Tg of the polymer composition, preferably at least about 5°C higher, preferably at least about 15°C higher than the Tg, and preferably in the range of from about Tg+5°C to about Tg+75°C, preferably from about Tg+5°C to about Tg+30°C. Thus, for a polyester material, typically stretching is effected at temperatures in the range of about 5 to about 155°C, preferably about 5 to about 110°C. It is not necessary to stretch equally in the machine and transverse directions although this is preferred if balanced properties are desired.

A stretched film may be, and preferably is, dimensionally stabilised by heat-setting under dimensional support at a temperature above the glass transition temperature of the polymer but below the melting temperature thereof, to induce the desired crystallisation of the polymer. During the heat-setting, a small amount of dimensional relaxation may be performed in the transverse direction (TD) by a procedure known as "toe-in". Toe-in can involve dimensional relaxation of the order 2 to 4%. While dimensional relaxation in the process or machine direction (MD) is also possible, as is known in the art. The actual heat-set temperature and time will vary depending on the composition of the film and its desired final thermal shrinkage but should not be selected so as to substantially degrade the toughness properties of the film such as tear resistance. Within these constraints, preferred films are heat-set at a temperature from about 80°C less than the melting temperature of the film (i.e. $T_M$-80°C) to about 10°C less than $T_M$ (i.e. $T_M$-10°C), preferably from about $T_M$-70°C to about $T_M$-20°C. Thus, for a polyester film, the heat-set temperature is suitably in the range of from about 130 to about 245°C, preferably from about 150 to about 245°C, and preferably at least 180°C, preferably in the range of 190 to 230°C. After heat-setting the film is typically quenched rapidly in order induce the desired crystallinity of the polymer.

Preferably, the film is further stabilized through use of an in-line relaxation stage. Alternatively the relaxation treatment can be performed off-line. In this additional step, the film is heated at a temperature lower than that of the heat-setting stage, and with a much reduced MD and TD tension. The tension experienced by the film is a low tension and typically less than 5 kg/m, preferably less than 3.5 kg/m, preferably less than 2.5 kg/m, and typically in the range of 1.0 to 2.0 kg/m of film width. For a relaxation process which controls the film speed, the reduction in film speed (and therefore the strain relaxation) is typically in the range 0 to 2.5%, preferably 0.5 to 2.0%. There is no increase in the transverse dimension of the film during the heat-stabilisation step. The temperature to be used for the heat stabilisation step can vary depending on the desired combination of properties from the final film, with a higher temperature giving better, i.e. lower, residual shrinkage properties. A temperature of 135 to 250 °C is generally desirable, preferably 150 to 230 °C, more preferably 170 to 200 °C. The duration of heating will depend on the temperature used but is typically in the range of 10 to 40 seconds, with a duration of 20 to 30 seconds being preferred. This heat stabilisation process can be carried out by a variety of methods, including flat and vertical configurations and either "offline" as a separate process step or "in-line" as a continuation of the film manufacturing process. Film thus processed will exhibit a smaller thermal shrinkage than that produced in the absence of such post heat-setting relaxation.

Formation of the composite film comprising the heat-sealable layer may be effected by conventional techniques. The method of formation of the heat-sealable layer and application thereof to the base layer typically depends on the identity of the heat-sealable layer. Conventional techniques include casting the heat-sealable layer onto a preformed base layer. Conveniently, formation of the heat-sealable layer and the base layer is effected by coextrusion, which would be particularly suitable for Embodiments B1 and B2 described hereinabove. Other methods of forming the heat-sealable layer include coating the heat-sealable polymer onto the base layer, and this technique would be particularly suitable for Embodiments B3 and B4 above. Coating may be effected using any suitable coating technique, including gravure roll coating, reverse roll coating, dip coating, bead coating, extrusion-coating, melt-coating or electrostatic spray coating. A preferred coating method is roll coating, including gravure roll coating and reverse roll coating. Coating may be conducted "off-line", i.e. after any stretching and subsequent heat-setting employed during manufacture of the base layer, or "in-line", i.e. wherein the coating step takes place before, during or between any stretching operation(s) employed. Preferably, coating is performed in-line, and preferably between the forward and sideways stretches of a biaxial stretching operation ("inter-draw" coating). Examples of the coating of heat-sealable layers include: GB-2024715 and GB-1077813 which disclose the inter-draw extrusion-coating of polyolefin onto substrates of polyolefin and polyester respectively; US-4333968 which discloses the inter-draw extrusion-coating of an ethylene-vinyl acetate copolymer onto a polypropylene substrate; and WO-02/59186 which discloses the coating of copolyester.

In a preferred embodiment, the polymeric films A and B are selected from coextruded polymeric films.

The polymeric films A and B preferably exhibit an Ultimate Tensile Strength (UTS) in each of the longitudinal and transverse directions of the film of at least about 15, preferably at least about 18, preferably at least about 19, preferably at least about 20, preferably at least about 21 kg/mm$^2$. The polymeric films A and B preferably exhibit an Elongation To Break (ETB) in each of the longitudinal and transverse directions of the film of at least 110%, preferably at least 130%, preferably at least 150 %, preferably at least 160 %, preferably at least 170 %, preferably at least 180 %, preferably at least 190 %, preferably at least 200 %.

The polymeric films A and B preferably exhibit a low shrinkage, preferably less than 10%, preferably less than 5%, preferably less than 3%, preferably less than 2%, preferably less than 1% at 150°C over 30 minutes, particularly in the machine (longitudinal dimension) of the film. Preferably such shrinkage values are exhibited in both dimensions of the film (i.e. the longitudinal and transverse dimensions).

It will be appreciated that the terms "longitudinal direction" and "transverse direction" of the film refer to the directions in which a film was stretched during its manufacture. The term "machine direction" is also used herein to refer to the longitudinal direction.

In the polymeric film tube of the present invention, said longitudinal direction of the film is preferably aligned or substantially aligned with the longitudinal axis of the tube.

The chemical composition and/or physical characteristics (including for instance dimensions, such as total thickness and layer thicknesses) of polymeric film A may be the same as or different to that of polymeric film B. However, in a preferred embodiment, the polymeric films A and B have the same chemical composition as each other. In a preferred embodiment, the polymeric films A and B have different dimensions to each other, as described herein below.

Preferably, said polymeric film A and said polymeric film B are independently selected from films having a total thickness of from about 10 to about 500$\mu$m, preferably from about 10 to 300 $\mu$m. Preferably, the thickness of polymeric film A is less than the thickness of polymeric film B, preferably no more than 75%, preferably no more than 50%, preferably no more than 30% of the thickness of polymeric film B. Preferably, the thickness of polymeric film A is at least 10%, preferably at least 20% of the thickness of polymeric film B. Preferably, the thickness of polymeric film A is in the range of 10-75%, preferably 20-50%, preferably 20-30% of the thickness of polymeric film B. Preferably, said polymeric film B has a thickness of 20 to 300, preferably from 20 to 100 $\mu$m, and preferably said polymeric film A has a thickness of from 10 to about 20 $\mu$m.

The thickness of a heat-sealable layer is preferably no more than 30%, more preferably no more than 25% and more preferably no more than 20%, and preferably at least 2.5% more preferably at least 5%, and preferably from about 10% to about 20%, of the total thickness of the polymeric film. Typically, a heat-sealable layer has a thickness of up to about 25$\mu$m, more preferably up to about 15$\mu$m, more preferably up to about 10$\mu$m, and preferably at least 2 $\mu$m, and preferably in a range of from about 0.5 to about 10$\mu$m, and more preferably from about 2 to about 10$\mu$m.

The planar dimension of each of polymeric films A and B is described by a length and a width, wherein the length dimension of the polymeric films corresponds with the length of the polymeric tube. The lengths of polymeric films A and B are the same or substantially the same. The width dimension of each of polymeric films A and B is in the transverse, or cross-sectional, dimension of the polymeric tube. Preferably, the width of polymeric film B is greater than the width of polymeric film A.

In the tube of the present invention, the polymeric films A and B are preferably arranged such that the first surface B1 of said polymeric film B constitutes at least a major portion of the outer surface of said tube. In this context, the term "at least a major portion" means that the first surface B1 of said polymeric film B constitutes at least 50%, preferably at least 65%, preferably at least 80%, preferably at least 90%, preferably at least 95%, preferably at least 99% and preferably substantially all of the outer surface of said tube.

In the tube of the present invention, said heat-sealable surface B2 of said polymeric film B constitutes at least a major portion of the inner surface of said first channel of said tube, particularly in the first aspect of the invention.

Thus, in a preferred embodiment the polymeric film tube of the invention is primarily formed by polymeric film B which constitutes the outer perimeter of the tube, wherein polymeric film A is disposed on the inner surface of the tube, and wherein the inner polymeric film A functions as an auxiliary film which bridges or connects the edges (B-a and B-b) of the polymeric film B to form a tube. The polymeric films A and B are disposed such that the heat-sealable surface A2 is contacted with the heat-sealable surface B2 to form a heat-seal bond at each edge (B-a and B-b) of the polymeric film B. Thus, polymeric film A is heat-sealed to polymeric film B such that a first width portion of polymeric film A extends beyond the edge B-a of polymeric film B and a second width portion of polymeric film A extends beyond the edge B-b of polymeric film B to form the tube by two overlap heat-seal bonds. It will be appreciated that each of said first and second width portions of polymeric film A is bounded at one end by opposite edges of the polymeric film A. It will also be appreciated that, at least in the first aspect of the invention, said first and second width portions are at opposite ends of the width of polymeric film A. Thus, it is preferred that a first heat-seal bond is formed between the heat-sealable surfaces adjacent edge B-a of film B and edge A-b of film A, and a second heat-seal bond formed between the heat-sealable surface adjacent edge B-b of film B and a portion of the heat-sealable surface of film A. In the first aspect of the invention, said second heat-seal bond is suitably formed between the heat-sealable surface adjacent edge B-b of film B and edge A-a of film A.

Thus, in the first aspect of the invention, two heat-seal bonds are formed (HSB1 and HSB2), preferably one at each edge (B-a and B-b) of the polymeric film B, such that each heat-seal bond extends in the longitudinal direction of the film, and in the direction of the longitudinal axis of the tube. The heat-seal bond at edge B-a is referred to herein as heat-seal bond HSB1, and the heat-seal bond at edge B-b is referred to herein as heat-seal bond HSB2

In the second aspect of the invention, a third heat-seal bond (HSB3) is formed. The first two heat-seal bonds (HSB1 and HSB2) correspond to those of the first aspect of the invention, i.e. preferably one at each edge (B-a and B-b) of the polymeric film B, wherein each heat-seal bond extends in the longitudinal direction of the film, and in the direction of the longitudinal axis of the tube. In the second aspect of the invention, the overlap between polymeric films A and B is greater than in the first aspect, and sufficient to allow the formation of said second channel by the formation of a third heat-seal bond which also extends in the longitudinal direction of the tube.

Thus, in the second aspect, a portion of said second heat-sealable surface A2 of polymeric film A and a portion of said second heat-sealable surface B2 of said polymeric film B preferably constitute the inner surfaces of said second channel.

In the second aspect, boundaries of said second channel are defined by said third heat-seal bond (HSB3) between the heat-sealable surface adjacent edge A-a of film A and a portion of the heat-sealable surface B2 which is between edges B-a and B-b, and by said second heat-seal bond (HSB2) which is between the heat-sealable surface adjacent edge B-b of film B and a portion of the heat-sealable surface A2 which is between edges A-a and A-b.

The relative sizes of the polymeric films A and B, and the spacing between said second and third heat-seal bonds, define the size (i.e. the cross-sectional area) of the second channel. The relative sizes of the first and second channels are not limited in the invention. The sizes of the first and second channels may be the same or different. The relative sizes of the first and second channels may be determined by the relative amounts and/or flow rates of the injectable chemicals required for the desired chemical reaction of a dual component injectable chemical system.

As noted herein above, the thickness of polymeric film A is preferably less than polymeric film B. Polymeric film B is primarily responsible for imparting the tube with sufficient stiffness to enable the tube to be positioned in its desired location, and hence exhibits the relatively greater thicknesses described herein. Polymeric film A is primarily responsible for joining the edges of the polymeric film B to form a tube and hence may exhibit the relatively lower thicknesses described herein, the primary consideration being that the heat-sealable layer should be sufficiently thick to effect strong heat-seal bonds. Advantageously, polymeric film A is more easily ruptured than polymeric film B, which is a further function of its relatively lower thickness, so that the polymeric film A may be ruptured at a predetermined location in order to deliver injectable chemical(s), or mixing thereof, at said predetermined location within a structure. This aspect of the invention is applicable to each of the first and second aspects but is of particular utility for the second aspect, and thereby allows a first injectable chemical in said first channel and a second injectable chemical in said second channel to be mixed at a pre-determined distance along the tube. The rupturing of the polymeric film may be effected by any suitable means, for instance a drill bit.

The dimensions and cross-sectional area of the polymeric film tube disclosed herein is not particularly limited, and will depend on the end-use to which the tube is put. Preferably, however, the tube has dimensions such that the width of the cross-section is from about 1 cm to about 500 cm, or a cross-sectional area of from 0.5 cm$^2$ to 20 m$^2$.

The width of the overlap heat-seal bonds, i.e. the degree to which polymeric film A overlaps with polymeric film B during creation of the heat-seal bonds to form the tube, will depend primarily on the cross-section dimension of tube, and also on the thickness of the respective polymeric films and heat-seal layers thereof. It will be appreciated that the width of an overlap heat-seal bond is a factor which modulates the strength of the heat-seal bond. Preferably, said polymeric film A and said polymeric film B overlap by at least 1 mm to form an overlap heat-seal bond. For instance, a tube having a cross-sectional width of up to about 10cm, the overlap heat-seal bond suitably has a width in the range of from about 1 mm to about 10mm. The width of the overlap heat-seal bond will typically increase as the cross-sectional width of the tube increases.

The length of the tube can be any appropriate length required to deliver the injectable chemicals to the desired location. Thus, the length of the tube may be as little at 10 cm or up to several metres, for instance 2 m.

It will be appreciated that the invention is not limited to tubes having one or two channels, and a third channel or even subsequent channels may also be provided, for instance by using an additional heat-seal bond in the two-film system as described above, or by using more than two films. Thus, additional channels may be formed within the channel spacing between said second and third heat-seal bonds by forming additional heat seal bonds between the said second and third heat-seal bonds. Typically, however, the tube contains no more than two channels and is formed from two polymeric films.

The formation of the heat-seal bonds between polymeric films A and B to form the tube is described hereinbelow.

The heat-seal bond strength between the heat-sealable surfaces of polymeric films A and B is preferably at least 50 g/mm (preferably at least 70 g/mm), measured as described herein.

According to a **third** aspect, there is disclosed a kit comprising a first heat-sealable polymeric film A and a second heat-sealable polymeric film B wherein said kit is suitable for forming a tube comprising a first channel which extends along the longitudinal axis of said tube, wherein:

(i) said tube is constituted by a first heat-sealable polymeric film A and a second heat-sealable polymeric film B,
(ii) said polymeric film A has a first surface A1 and a second heat-sealable surface A2,
(iii) said polymeric film B has a first surface B1 and a second heat-sealable surface B2,
(iv) said polymeric film A comprises edges A-a and A-b and said polymeric film B comprises edges B-a and B-b, wherein said edges A-a, A-b, B-a and B-b extend along the longitudinal axis of the tube,
(v) said polymeric films A and B are disposed such that said heat-sealable surfaces A2 and B2 are in contact with and adhered to each other by heat-seal bonds which do not extend across the full surface area of at least one of said heat-sealable surfaces A2 and B2, and
(vi) polymeric film A is adhered to polymeric film B by first and second overlap heat-seal bonds (HSB1 and HSB2) to define said tube and said first channel thereof.

According to a **fourth** aspect of the invention, there is provided a kit comprising a first heat-sealable polymeric film A and a second heat-sealable polymeric film B wherein said kit is suitable for forming a tube comprising a first channel and a second channel wherein each of said first and second channels extends along the longitudinal axis of said tube, wherein:

(i) said tube is constituted by said first heat-sealable polymeric film A and said second heat-sealable polymeric film B,
(ii) said polymeric film A has a first surface A1 and a second heat-sealable surface A2,
(iii) said polymeric film B has a first surface B1 and a second heat-sealable surface B2,
(iv) said polymeric film A comprises edges A-a and A-b and said polymeric film B comprises edges B-a and B-b, wherein said edges A-a, A-b, B-a and B-b extend along the longitudinal axis of the tube,
(v) said polymeric films A and B are disposed such that said heat-sealable surfaces A2 and B2 are in contact with and adhered to each other by heat-seal bonds which do not extend across the full surface area of said heat-sealable surfaces A2 and B2,
(vi) polymeric film A is adhered to polymeric film B by first and second overlap heat-seal bonds (HSB1 and HSB2) to define said tube and said first channel thereof, and
(vii) polymeric film A is further adhered to polymeric film B by a third heat-seal bond (HSB3) between said heat-sealable surfaces A2 and B2 such that said third heat-seal bond defines a second channel comprising first and second walls which extend along the longitudinal axis of said tube.

According to a **fifth** aspect, there is disclosed a method of forming a tube of polymeric film wherein said tube comprises a first channel which extends along the longitudinal axis of said tube, said method comprising the steps of:

(a) providing a first heat-sealable polymeric film A and a second heat-sealable polymeric film B, wherein said polymeric film A has a first surface A1 and a second heat-sealable surface A2, and said polymeric film B has a first surface B1 and a second heat-sealable surface B2, wherein said polymeric film A comprises edges A-a and A-b and said polymeric film B comprises edges B-a and B-b,
(b) disposing said polymeric films A and B such that said heat-sealable surfaces A2 and B2 are in contact with each other and adhering polymeric film A to polymeric film B by heat-seal bonds which do not extend across the full surface area of at least one of said heat-sealable surfaces A2 and B2, such that first and second overlap heat-seal bonds are formed to define said tube and said first channel thereof, and

wherein said polymeric films A and B are disposed so that edges A-a, A-b, B-a and B-b extend along the longitudinal axis of the tube.

According to a **sixth** aspect of the invention, there is provided a method of forming a tube of polymeric film wherein said tube comprises a first channel and a second channel wherein each of said first and second channels extends along the longitudinal axis of said tube, said method comprising the steps of:

(a) providing a first heat-sealable polymeric film A and a second heat-sealable polymeric film B, wherein said polymeric film A has a first surface A1 and a second heat-sealable surface A2, and said polymeric film B has a first surface B1 and a second heat-sealable surface B2, wherein said polymeric film A comprises edges A-a and A-b and said polymeric film B comprises edges B-a and B-b,
(b) disposing said polymeric films A and B such that said heat-sealable surfaces A2 and B2 are in contact with each other and adhering polymeric film A to polymeric film B by heat-seal bonds which do not extend across the full surface area of each of said heat-sealable surfaces A2 and B2, such that:

(i) first and second overlap heat-seal bonds are formed to define said tube and said first channel thereof, and
(ii) a third heat-seal bond is formed between said heat-sealable surfaces A2 and B2 such that said third heat-seal bond defines a second channel comprising first and second walls which extend along the longitudinal axis of said tube,

wherein said polymeric films A and B are disposed so that edges A-a, A-b, B-a and B-b extend along the longitudinal axis of the tube.

In the fifth aspect and the sixth aspect of the invention, said heat-seal bonds are preferably formed by the application of temperature and pressure, preferably at a temperature of no more than 200°C (and preferably within the range of 100 to 200°C) and a pressure of no more than 100 psi (and preferably within the range of 10 to 60 psi) for a time of no more than one minute (and preferably within the range of 0.5 to 30 seconds). It will be appreciated that heat-seal bonds are required at only certain pre-determined locations around the circumference of the tube. Suitable heat-sealing equipment is readily commercially available, for instance from Sentinel. The assembly is placed into the heat-sealing machine and heat and pressure are applied at multiple isolated locations to form the afore-mentioned heat-seal bonds.

In order to avoid the formation of heat-seal bonds between the heat-sealable surface of polymeric film B and the first surface of polymeric film A within the first channel, a removable release sheet is preferably disposed within the channel between the heat-sealable surface of polymeric film B and the first surface of polymeric film A prior to application of heat and pressure. The release sheet is removed from the tube after the heat-sealing operation. The invention may utilise any suitable release sheet which is not heat-sealable to the heat-sealable surface and the first surface of the polymeric films described herein under the conditions of heat and pressure used to form said heat-seal bonds. For instance, a suitable wax or silicone release paper or film well known in the art may be used.

According to a **seventh** aspect of the invention, there is provided a method of delivering one or more injectable chemicals to a predetermined location within a structure, said method comprising the steps of

(a) providing a tube having a first channel extending along the longitudinal axis of said tube, wherein said tube is constituted by a first heat-sealable polymeric film A and a second heat-sealable polymeric film B, as defined herein,
(b) directing a first fluid stream comprising said injectable chemical(s) along said first channel to said predetermined location.

According to an **eighth** aspect of the invention, there is provided a method for delivering a plurality of injectable chemicals to a predetermined location within a structure, said method comprising the steps of

a) providing a tube having first and second channels extending along the longitudinal axis of said tube, wherein said tube is constituted by a first heat-sealable polymeric film A and a second heat-sealable polymeric film B, as defined herein,
(b) directing a first fluid stream comprising a first injectable chemical along said first channel to said predetermined location,
(c) directing a second fluid stream comprising a second injectable chemical along said second channel to said predetermined location,
(d) mixing said first and second streams at said predetermined location.

The method of the eighth aspect preferably further comprises the step of rupturing said first heat-sealable polymeric film A at said predetermined location such that said second fluid stream in said second channel mixes with said first fluid stream in said first channel, thereby causing a chemical reaction between said first and second injectable chemicals.

It will be appreciated that the disclosure and preferences described for the first and second aspects of the invention are of course also applicable to the third to eighth aspects of the invention. It will be appreciated that the second aspect of the invention particularly corresponds to the fourth, sixth and eighth aspects of the invention.

The present invention is of particular utility for the delivery of injectable chemicals in mining and construction projects. The polymeric tube of the present invention may be used to deliver injectable chemicals to strengthen the walls of a borehole (such as a borehole in a mining operation), a pipeline, shaft or tunnel; or to anchor, consolidate and control gases, water and strata in subterranean locations, for instance to consolidate fractured strata and/or prevent the ingress of water. The polymeric tube of the present invention may also be used to deliver injectable chemicals in renovation and construction projects, for instance to repair or fill cavities or fissures in a structure. As noted hereinabove, a variety of injectable chemicals are used for this purpose including polyurethane, silicate and phenolic-based resin systems.

The invention is further illustrated with reference to the figures, as described below.

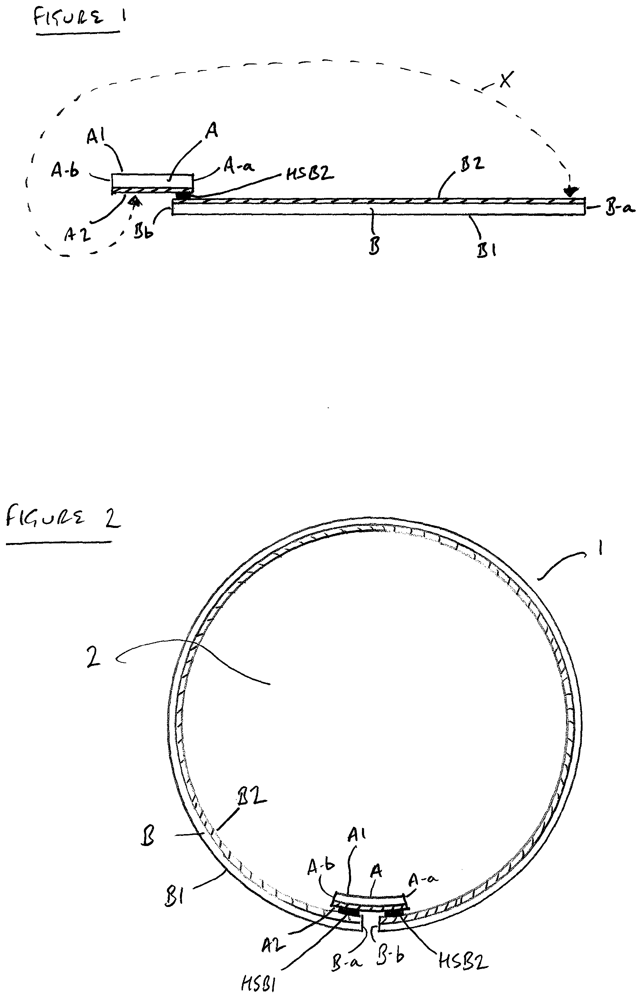

Figure 1 shows, in cross-section, a polymeric film A having a first surface A1 and a second heat-sealable surface A2 and edges A-a and A-b, and a polymeric film B having a first surface B1 and a second heat-sealable surface B2 and edges B-a and B-b, wherein polymeric film A is adhered to polymeric film B by an overlap heat-seal bond HSB2. Heat-sealing is effected by curling the film assembly along the dotted line X so that a further heat-seal bond (HSB1; not shown) is effected between the heat-sealable surfaces of polymeric films A and B at the location of the arrow heads on dotted line X, thereby forming a tube having a first channel. The heat-seal bonds HSB1 and HSB2 are effected along the length of the films A and B (i.e. in a direction perpendicular to the cross-section).

Figure 2 shows the film assembly of Figure 1 after formation of the heat-seal bond HSB1 to form a tube (1) having a first channel (2).

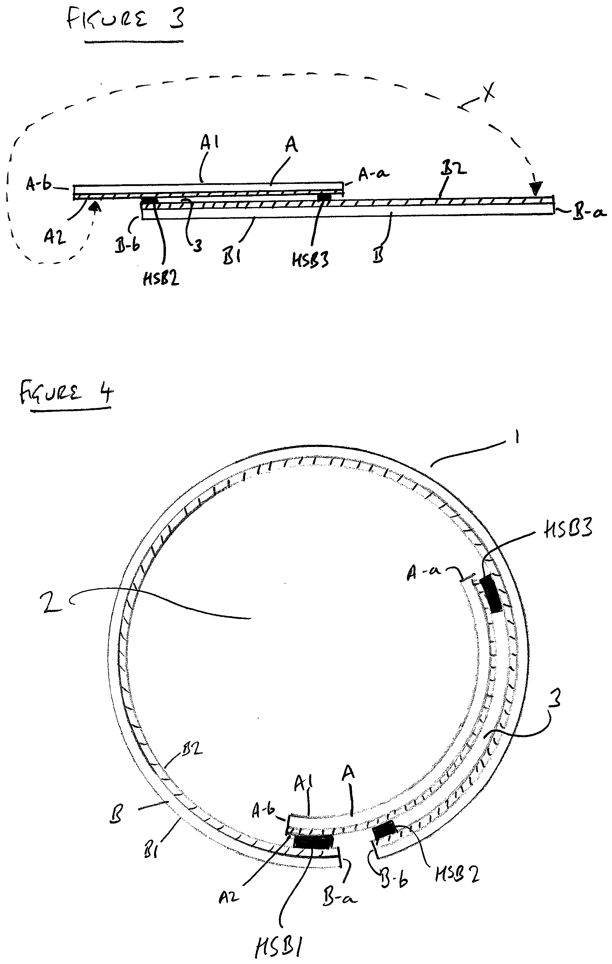

Figure 3 shows, in cross-section, a polymeric film A having a first surface A1 and a second heat-sealable surface A2 and edges A-a and A-b, and a polymeric film B having a first surface B1 and a second heat-sealable surface B2 and edges B-a and B-b, wherein polymeric film A is adhered to polymeric film B by an overlap heat-seal bond HSB2 and a further heat-seal bond HSB3. Heat-seal bonds HSB2 and HSB3 extend along the length of the films A and B (i.e. in a direction perpendicular to the cross-section) and define a second channel (3) which extends in the longitudinal direction of said tube. Heat-sealing is effected by curling the film assembly along the dotted line X so that a further heat-seal bond (HSB1; not shown) is effected between the heat-sealable surfaces of polymeric films A and B at the location of the arrow heads on dotted line X, thereby forming a tube having a first channel therein. The heat-seal bonds HSB1, HSB2 and HSB3 are effected along the length of the films A and B (i.e. in a direction perpendicular to the cross-section).

Figure 4 shows the film assembly of Figure 2 after formation of the heat-seal bond HSB1 to form a tube (1) comprising a first channel (2) and a second channel (3).

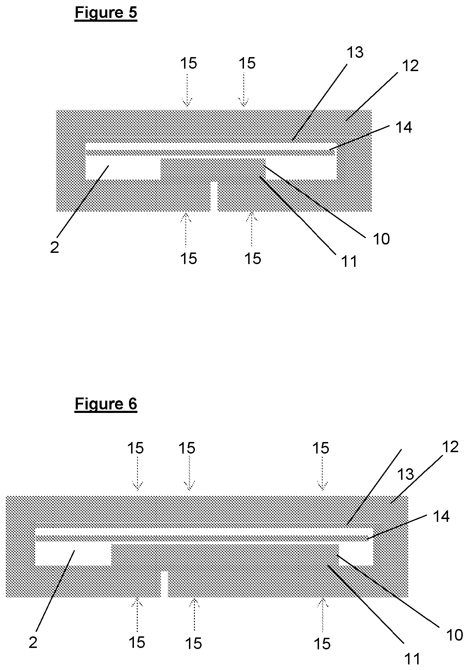

Figure 5 shows, in cross section, the arrangement for manufacture of a tube having a single channel described herein. Polymeric film A has a base layer (10) providing said first surface A1 and a heat-sealable layer (11) providing said heat-sealable surface A2. Polymeric film B has a base layer (12) providing said first surface B1 and a heat-sealable layer (13) providing said heat-sealable surface B2. A removable release sheet (14) is disposed in the channel (2) in order to avoid the formation of a heat-seal bond between the heat-sealable layer (13) of polymeric film B and the base layer (10) of polymeric film A. The assembly is placed into the heat-sealing machine and heat and pressure are applied at multiple isolated locations (15). The release sheet is removed from the tube after the heat-sealing operation.

Figure 6 shows the corresponding arrangement for the manufacture of a tube having two channels.

***Property Measurement***

The following test methods may be used to characterise the polymeric film:

(i) Intrinsic viscosity (in units of dL/g) of the polyester and polyester substrate is measured by solution viscometry in accordance with ASTM D5225-98(2003) on a ViscotekTM Y-501C Relative Viscometer (see, for instance, Hitchcock, Hammons & Yau in American Laboratory (August 1994) "The dual-capillary method for modern-day viscometry") by using a 0.5% by weight solution of polyester in o-chlorophenol at 25°C and using the Billmeyer single-point method to calculate intrinsic viscosity:

$$\eta = 0.25\eta\text{red} + 0.75(\ln \eta\text{rel})/c$$

wherein:

$\eta$ = the intrinsic viscosity (in dL/g),
$\eta$rel = the relative viscosity,
c = the concentration (in g/dL), &
$\eta$red = reduced viscosity (in dL/g), which is equivalent to ($\eta$rel-1)/c (also expressed as $\eta$sp/c where $\eta$sp is the specific viscosity).

(ii) The Ultimate Tensile Strength (UTS), Elongation To Break (ETB) and the F5 value (stress at 5% elongation) are measured according to test method ASTM D882-18. Using a straight edge and a calibrated sample cutter (10mm+\-0.5mm) five strips (100mm in length) of the film are cut along the machine direction. Each sample is tested using an Instron model 3111 materials test machine, using pneumatic action grips with rubber jaw faces. Temperature (23°C) and relative humidity (50%) are controlled. The crosshead speed (rate of separation) is 25 mm/min. The strain rate is 50%. Elongation to Break ($\varepsilon$B (%)) is defined as:

$$\epsilon_B (\%) = (\text{extension at break} / L_0) \times 100$$

where $L_0$ is the original length of the sample between grips.

(iii) Thermal shrinkage is assessed for film samples of dimensions 200mm x 10 mm which were cut in specific directions relative to the machine and transverse directions of the film and marked for visual measurement. The longer dimension of the sample (i.e. the 200mm dimension) corresponds to the film direction for which shrinkage is being tested, i.e. for the assessment of shrinkage in the machine direction, the 200 mm dimension of the test sample is oriented along the machine direction of the film. After heating the specimen to the predetermined temperature of 150°C (by placing in a heated oven at that temperature) and holding for an interval of 30 minutes, it was cooled to room temperature and its dimensions re-measured manually. The thermal shrinkage was calculated and expressed as a percentage of the original length.

(iv) Glass transition temperature ($T_g$) and crystalline melting point ($T_m$) were measured by differential scanning calorimetry (DSC) using a PerkinElmer HyperDSC 8500. Unless otherwise stated, measurements were made according to the following standard test method and based on the method described in ASTM E1356-98. The sample was maintained under an atmosphere of dry nitrogen for the duration of the scan. A flow rate of 20 ml min$^{-1}$ and Al pans were used. Samples (5 mg) were heated at 20 °C/min from 20°C to 350°C

The value of a $T_g$ was determined as the extrapolated onset temperature of the glass transition observed on the DSC scans (heat flow (W/g) against temperature (°C)), as described in ASTM E1356-98. The value of a $T_m$ was determined from the DSC scans as the peak endotherm of the transition.

(v) Crystallinity was measured from the DSC analysis described hereinabove as the degree of crystallinity ($X_c$) calculated according to the equation:

$$X_c = \Delta H_m / \Delta H_m°$$

wherein:

$\Delta H_m$ = experimental enthalpy of fusion calculated from the integral of the melting endotherm; $\Delta H_m°$ = theoretical enthalpy of fusion of the corresponding poly(alkylene-carboxylate) homopolymer at 100 % crystallinity. Thus, for PET (or PET-based) polyesters, $\Delta H_m°$ is the theoretical enthalpy of fusion of a 100% crystalline PET polymer (140 J/g), and for PEN (or PEN-based) polyesters, $\Delta H_m°$ is the theoretical enthalpy of fusion of a 100% crystalline PEN polymer (103 J/g), as defined in the literature (B. Wunderlich, Macromolecular Physics, Academic Press, New York, (1976)).

(vi) Heat-seal strength of polymeric film A to polymeric film B is measured at ambient temperatures (23°C $\pm$ 2°C) by the following procedure. Samples of the two films are positioned together such that their heat-sealable surfaces are in contact and subjected to a temperature of 150°C for 1 second under a pressure of 60 psi. The sealed film assembly is cooled to room temperature, and the sealed composite cut into 25mm wide strips. The heat-seal strength is determined using an Instron Model 4301 by measuring the force required under linear tension per unit width of seal to peel the layers of the film apart at a constant speed of 4.23 mm/second. The procedure was repeated and a mean value of 5 results calculated.

The invention is further illustrated by the following examples. It will be appreciated that the examples are for illustrative purposes only and are not intended to limit the invention as described above.

## EXAMPLES

### Example 1 (Single Interior Channel)

A polymer composition (PET) was co-extruded with a heat-sealable copolyester derived from terephthalic acid, isophthalic acid and ethylene glycol (molar ratios of TA/IPA/EG are 82/18/100), cast onto a water-cooled rotating quench drum to yield an amorphous cast extrudate. The cast extrudate was heated to a temperature in the range of about 50 to 80°C and stretched in the direction of extrusion to approximately 3 times its original dimensions. The film was passed into a stenter oven at a temperature of 100°C where the film was stretched in the sideways direction to approximately 3 times its original dimensions. The biaxially stretched film was heat-set at a temperature of from 210°C to 230°C in a 3-stage crystallizer by conventional means. The total film thickness of the final film was 50 $\mu$m; the heat sealable layer was approximately 10 $\mu$m thick. This was polymeric film B.

A coextruded biaxially oriented polymeric film A was prepared using the same materials, essentially according to the procedure above, except that the total film thickness was 30 $\mu$m, with a heat-sealable layer 5 $\mu$m thick.

A sheet of dimensions 30 cm (length) by 3 cm (width) was cut from polymeric film A so that the length direction was aligned in the longitudinal (machine) axis of the film. A sheet of dimensions 30 cm (length) by 25 cm (width) was cut from polymeric film B so that the length direction was aligned in the longitudinal (machine) axis of the film.

Polymeric sheets A and B were aligned substantially parallel and overlapping along a first long edge of each sheet (A-a and B-b) by about 1 cm, and a heat-seal bond effected by subjecting the region of overlap to a temperature of 150°C for 1 second under a pressure of 60 psi, thereby forming the heat-seal bond referred to herein as HSB2. The film assembly was curled round on itself so that each of the second long edges of each sheet (A-b and B-a) were overlapping by about 1 cm, thereby forming the heat-seal bond referred to herein as HSB1. The tube had an internal diameter of about 8 cm, and exhibited a single interior channel.

### Example 2 (Two Interior Channels)

Polymeric sheets A and B were prepared as described for Example 1, except that the width of polymeric sheet A was 12 cm.

Sheets A and B were aligned substantially parallel and overlapping along a first long edge of each film by about 10 cm, and a heat-seal bond effected by subjecting the region in the vicinity of the first long edge (B-b) of sheet B to the above noted heat-seal conditions, thereby forming the heat-seal bond referred to herein as HSB2. A further heat-seal bond was effected by subjecting the region in the vicinity of the first long edge (A-a) of sheet A to the same heat-seal conditions so that it formed a heat-seal bond to the heat-sealable surface B2 at a location between edges B-b and B-a, thereby forming the heat-seal bond referred to herein as HSB3. The film assembly was curled round on itself so that each of the second long edges (A-b and B-a) of sheets A and B were overlapping by about 1 cm, thereby forming the heat-seal bond referred to herein as HSB1. The tube had an internal diameter of about 8 cm, and exhibited two interior channels.

The heat-seal bonds in the above examples exhibited a heat seal bond strength of 71 g/mm, measured as described herein.

In each of the examples, the heat-seal step was conducted in a Sentinel heat-sealing machine operating at 150°C, 60 psi and 1 second using a wax release paper located in the interior channel, as illustrated in Figures 5 and 6.

**Claims**

1. A tube comprising a first channel and a second channel wherein each of said first and second channels extends along the longitudinal axis of said tube, and wherein:

   (i) said tube is constituted by a first heat-sealable polymeric film A and a second heat-sealable polymeric film B,
   (ii) said polymeric film A has a first surface A1 and a second heat-sealable surface A2,
   (iii) said polymeric film B has a first surface B1 and a second heat-sealable surface B2,
   (iv) said polymeric film A comprises edges A-a and A-b and said polymeric film B comprises edges B-a and B-b, wherein said edges A-a, A-b, B-a and B-b extend along the longitudinal axis of the tube,
   (v) said polymeric films A and B are disposed such that said heat-sealable surfaces A2 and B2 are in contact with and adhered to each other by heat-seal bonds which do not extend across the full surface area of said heat-sealable surfaces A2 and B2,
   (vi) polymeric film A is adhered to polymeric film B by first and second overlap heat-seal bonds (HSB1 and HSB2) to define said tube and said first channel thereof, and
   (vii) polymeric film A is further adhered to polymeric film B by a third heat-seal bond (HSB3) between said heat-sealable surfaces A2 and B2 such that said third heat-seal bond defines a second channel comprising first and second walls which extend along the longitudinal axis of said tube.

2. A tube according to claim 1 wherein said second channel is defined by said third heat-seal bond (HSB3) between the heat-sealable surface adjacent edge A-a of film A and a portion of the heat-sealable surface B2 which is between edges B-a and B-b, and by said second heat-seal bond (HSB2) between the heat-sealable surface adjacent edge B-b of film B and a portion of the heat-sealable surface A2 which is between edges A-a and A-b.

3. A tube according to any preceding claim wherein said first surface A1 of polymeric film A and said first surface B1 of polymeric film B are not heat-sealable.

4. A tube according to any preceding claim wherein said polymeric film A and said polymeric B are independently selected from films comprising a base layer and a heat-sealable layer,
   optionally wherein said base layer is polyester comprising an aromatic dicarboxylic acid and an aliphatic diol, preferably wherein said polyester is polyethylene terephthalate.

5. A tube according to any preceding claim wherein said heat-sealable layer is:

   (a) a copolyester derived from at least 3 monomeric repeating units, at least one of which is an aromatic dicarboxylic acid, and at least one of which is an aliphatic diol,
   optionally wherein said copolyester is derived from:

      (i) terephthalic acid, a second aromatic dicarboxylic acid and ethylene glycol, preferably wherein said second aromatic dicarboxylic acid is isophthalic acid;
      (ii) terephthalic acid, ethylene glycol and a second diol, preferably wherein said second diol is selected from a cycloaliphatic diol, preferably 1,4-cyclohexanedimethanol; or
      (iii) terephthalic acid, ethylene glycol and a second dicarboxylic acid, preferably wherein said second dicarboxylic acid is selected from an aliphatic dicarboxylic acid, preferably azelaic acid; or

   (b) formed from ethylene vinyl acetate (EVA), preferably having a vinyl acetate content in the range of 9% to 40%, and more preferably 15% to 30%.

6. A tube according to any preceding claim wherein said polymeric film A and said polymeric B are independently selected from biaxially oriented polymeric films; and/or wherein said polymeric film A and said polymeric B are independently selected from coextruded polymeric films.

7. A tube according to any preceding claim wherein said tube has a cross-sectional width of from about 1 cm to about 500 cm.

8. A tube according to any preceding claim wherein said polymeric film A and said polymeric film B overlap by at least 1 mm to form said overlap heat-seal bond(s) (HSB1 and/or HSB2).

9. A tube according to any preceding claim wherein said polymeric film A and said polymeric film B are independently selected from films having a thickness of from 10 to 500 $\mu$m, preferably wherein said polymeric film B has a thickness of 20 to 300, preferably from 20 to 100 $\mu$m, and preferably wherein said polymeric film A has a thickness of from 10 to about 20 $\mu$m.

10. A tube according to any preceding claim wherein the width of said polymeric film B is greater than the width of said polymeric film A.

11. A tube according to any preceding claim wherein said first surface B1 of said polymeric film B constitutes at least a major portion of the outer surface of said tube; and/or
wherein said heat-sealable surface B2 of said polymeric film B constitutes at least a major portion of the inner surface of said first channel of said tube.

12. A tube according to any preceding claim wherein a portion of said second heat-sealable surface A2 of polymeric film A and a portion of said second heat-sealable surface B2 of said polymeric film B constitute inner surfaces of said second channel of said tube.

13. A kit comprising a first heat-sealable polymeric film A and a second heat-sealable polymeric film B wherein said kit is suitable for forming a tube comprising a first channel and a second channel wherein each of said first and second channels extends along the longitudinal axis of said tube, as defined in any of claims 1 and claims 2 to 12 when dependent on claim 1, wherein:

   (i) said tube is constituted by said first heat-sealable polymeric film A and said second heat-sealable polymeric film B,
   (ii) said polymeric film A has a first surface A1 and a second heat-sealable surface A2,
   (iii) said polymeric film B has a first surface B1 and a second heat-sealable surface B2,
   (iv) said polymeric film A comprises edges A-a and A-b and said polymeric film B comprises edges B-a and B-b, wherein said edges A-a, A-b, B-a and B-b extend along the longitudinal axis of the tube,
   (v) said polymeric films A and B are disposed such that said heat-sealable surfaces A2 and B2 are in contact with and adhered to each other by heat-seal bonds which do not extend across the full surface area of said heat-sealable surfaces A2 and B2,

   (vi) polymeric film A is adhered to polymeric film B by first and second overlap heat-seal bonds (HSB1 and HSB2) to define said tube and said first channel thereof, and
   (vii) polymeric film A is further adhered to polymeric film B by a third heat-seal bond (HSB3) between said heat-sealable surfaces A2 and B2 such that said third heat-seal bond defines a second channel comprising first and second walls which extend along the longitudinal axis of said tube.

14. A method of forming a tube of polymeric film as defined in any of claims 1 and 2 to 12 when dependent on claim 1 wherein said tube comprises a first channel and a second channel wherein each of said first and second channels extends along the longitudinal axis of said tube, said method comprising the steps of:

   (a) providing a first heat-sealable polymeric film A and a second heat-sealable polymeric film B, wherein said polymeric film A has a first surface A1 and a second heat-sealable surface A2, and said polymeric film B has a first surface B1 and a second heat-sealable surface B2, wherein said polymeric film A comprises edges A-a and A-b and said polymeric film B comprises edges B-a and B-b,
   (b) disposing said polymeric films A and B such that said heat-sealable surfaces A2 and B2 are in contact with each other and adhering polymeric film A to polymeric film B by heat-seal bonds which do not extend across the full surface area of each of said heat-sealable surfaces A2 and B2, such that:

      (i) first and second overlap heat-seal bonds are formed to define said tube and said first channel thereof, and
      (ii) a third heat-seal bond is formed between said heat-sealable surfaces A2 and B2 such that said third heat-seal bond defines a second channel comprising first and second walls which extend along the longitudinal axis of said tube,

   wherein said polymeric films A and B are disposed so that edges A-a, A-b, B-a and B-b extend along the longitudinal axis of the tube.

15. A method according to claim 14 wherein said heat-seal bonds are formed by the application of temperature and pressure,
and/or wherein a removable release sheet is disposed between the heat-sealable surface of polymeric film B and the first surface of polymeric film A prior to application of heat and pressure in order to avoid the formation of heat-seal bond(s) between the heat-sealable surface of polymeric film B and the first surface of polymeric film A.

16. A method of delivering one or more injectable chemicals to a predetermined location within a structure, said method comprising the steps of

(a) providing a tube having a first channel extending along the longitudinal axis of said tube, wherein

(i) said tube is constituted by a first heat-sealable polymeric film A and a second heat-sealable polymeric film B,
(ii) said polymeric film A has a first surface A1 and a second heat-sealable surface A2,
(iii) said polymeric film B has a first surface B1 and a second heat-sealable surface B2,
(iv) said polymeric film A comprises edges A-a and A-b and said polymeric film B comprises edges B-a and B-b, wherein said edges A-a, A-b, B-a and B-b extend along the longitudinal axis of the tube,
(v) said polymeric films A and B are disposed such that said heat-sealable surfaces A2 and B2 are in contact with and adhered to each other by heat-seal bonds which do not extend across the full surface area of at least one of said heat-sealable surfaces A2 and B2, and
(vi) polymeric film A is adhered to polymeric film B by first and second overlap heat-seal bonds (HSB1 and HSB2) to define said tube and said first channel thereof;

(b) directing a first fluid stream comprising said injectable chemical(s) along said first channel to said predetermined location.

17. A method according to claim 16 wherein said tube is as defined in any of claims 1 to 12.

18. A method according to claim 16 for delivering a plurality of injectable chemicals to a predetermined location within a structure, said method comprising the steps of

a) providing a tube having first and second channels extending along the longitudinal axis of said tube, wherein said tube is constituted by a first heat-sealable polymeric film A and a second heat-sealable polymeric film B, as defined in any of claims 1 and 2 to 12 when dependent on claim 1,
(b) directing a first fluid stream comprising a first injectable chemical along said first channel to said predetermined location,
(c) directing a second fluid stream comprising a second injectable chemical along said second channel to said predetermined location,
(d) mixing said first and second streams at said predetermined location

19. A method according to claim 18 further comprising the step of rupturing said first heat-sealable polymeric film A at said predetermined location such that said second fluid stream in said second channel mixes with said first fluid stream in said first channel, thereby causing a chemical reaction between said first and second injectable chemicals.

20. A method according to any of claims 16 to 19 for the delivery of injectable chemical(s) in mining and construction applications, particularly applications selected from: delivery of injectable chemicals to strengthen the walls of a borehole, a pipeline, shaft or tunnel; delivery of injectable chemicals to anchor, consolidate or control gases, water and strata in subterranean locations, including to consolidate fractured strata and/or prevent the ingress of water; and to deliver injectable chemicals in renovation and construction projects, including to repair or fill cavities or fissures in a structure;
and/or wherein said injectable chemical(s) are delivered to a predetermined location in a borehole of a mining operation.

21. A method according to any of claims 16 to 20, or a tube according to any of claims 1 or 2 to 12 when dependent on claim 1, or a kit according to claim 13, wherein said tube is suitable for the delivery of a dual-component injectable chemical system, wherein the two components are required to remain separate until their point of application, at which point the components are contacted in order to undergo a chemical reaction to provide the desired compound at a pre-determined location,
optionally wherein said injectable chemical system comprises or consists of a dual-component polyurethane or silicate resin system.

**Patentansprüche**

1. Rohr, das einen ersten Kanal und einen zweiten Kanal umfasst, wobei sich der erste und der zweite Kanal jeweils entlang der Längsachse des Rohrs erstrecken, und wobei:

(i) das Rohr aus einem ersten heißsiegelfähigen Polymerfilm A und einen zweiten heißsiegelfähigen Polymerfilm B gebildet ist,
(ii) der Polymerfilm A eine erste Oberfläche A1 und eine zweite heißsiegelfähige Oberfläche A2 aufweist,

(iii) der Polymerfilm B eine erste Oberfläche B1 und eine zweite heißsiegelfähige Oberfläche B2 aufweist,

(iv) der Polymerfilm A Kanten A-a und A-b umfasst und der Polymerfilm B Kanten B-a und B-b umfasst, wobei sich die Kanten A-a, A-b, B-a und B-b entlang der Längsachse des Rohrs erstrecken,

(v) die Polymerfilme A und B so angeordnet sind, dass die heißsiegelfähigen Oberflächen A2 und B2 in Kontakt miteinander stehen und durch Heißsiegelbindungen, die sich nicht über die gesamte Oberfläche der heißsiegelfähigen Oberflächen A2 und B2 erstrecken, aneinander haften,

(vi) der Polymerfilm A durch erste und zweite Überlappungs-Heißsiegelbindungen (HSB1 und HSB2) an den Polymerfilm B gehaftet ist, um das Rohr und den ersten Kanal davon zu definieren, und

(vii) der Polymerfilm A ferner durch eine dritte Heißsiegelbindung (HSB3) zwischen den Heißsiegelflächen A2 und B2 an den Polymerfilm B gehaftet ist, so dass die dritte Heißsiegelbindung einen zweiten Kanal definiert, der eine erste und eine zweite Wand umfasst, die sich entlang der Längsachse des Rohrs erstrecken.

2. Rohr nach Anspruch 1, wobei der zweite Kanal durch die dritte Heißsiegelbindung (HSB3) zwischen der heißsiegelfähigen Oberfläche angrenzend an die Kante A-a des Films A und einem Abschnitt der heißsiegelfähigen Oberfläche B2, der zwischen den Kanten B-a und B-b liegt, und durch die zweite Heißsiegelbindung (HSB2) zwischen der heißsiegelfähigen Oberfläche angrenzend an die Kante B-b des Films B und einem Abschnitt der heißsiegelfähigen Oberfläche A2, der zwischen den Kanten A-a und A-b liegt, gebildet wird.

3. Rohr nach einem der vorstehenden Ansprüche, wobei die erste Oberfläche A1 des Polymerfilms A und die erste Oberfläche B1 des Polymerfilms B nicht heißsiegelfähig sind.

4. Rohr nach einem der vorstehenden Ansprüche, wobei der Polymerfilm A und das Polymer B unabhängig ausgewählt sind aus Filmen, die eine Basisschicht und eine heißsiegelfähige Schicht umfassen, wobei die Basisschicht gegebenenfalls Polyester ist, der eine aromatische Dicarbonsäure und ein aliphatisches Diol umfasst, wobei der Polyester vorzugsweise Polyethylenterephthalat ist.

5. Rohr nach einem der vorstehenden Ansprüche, wobei die heißsiegelfähige Schicht ist:

(a) ein Copolyester abgeleitet von wenigstens 3 monomeren Wiederholungseinheiten, von denen wenigstens eine eine aromatische Dicarbonsäure ist und von denen wenigstens eine ein aliphatisches Diol ist, gegebenenfalls wobei der Copolyester abgeleitet ist von:

(i) Terephthalsäure, einer zweiten aromatischen Dicarbonsäure und Ethylenglycol, wobei die zweite aromatische Dicarbonsäure vorzugsweise Isophthalsäure ist;

(ii) Terephthalsäure, Ethylenglycol und einem zweiten Diol, wobei das zweite Diol vorzugsweise ausgewählt ist aus einem cycloaliphatischen Diol, vorzugsweise 1,4-Cyclohexandimethanol; oder

(iii) Terephthalsäure, Ethylenglycol und einer zweiten Dicarbonsäure, wobei die zweite Dicarbonsäure vorzugsweise ausgewählt ist aus einer aliphatischen Dicarbonsäure, vorzugsweise Azelainsäure; oder

(b) gebildet aus Ethylenvinylacetat (EVA), vorzugsweise mit einem Vinylacetatgehalt in dem Bereich von 9 % bis 40 % und bevorzugter 15 % bis 30 %.

6. Rohr nach einem der vorstehenden Ansprüche, wobei der Polymerfilm A und das Polymer B unabhängig aus biaxial orientierten Polymerfilmen ausgewählt sind; und/oder wobei der Polymerfilm A und das Polymer B unabhängig aus coextrudierten Polymerfilmen ausgewählt sind.

7. Rohr nach einem der vorstehenden Ansprüche, wobei das Rohr eine Querschnittsbreite von etwa 1 cm bis etwa 500 cm aufweist.

8. Rohr nach einem der vorstehenden Ansprüche, wobei sich der Polymerfilm A und der Polymerfilm B um wenigstens 1 mm überlappen, um die Überlappungs-Heißsiegelbindung(en) (HSB1 und/oder HSB2) zu bilden.

9. Rohr nach einem der vorstehenden Ansprüche, wobei der Polymerfilm A und der Polymerfilm B unabhängig ausgewählt sind aus Filmen mit einer Dicke von 10 bis 500 µm, wobei der Polymerfilm B vorzugsweise eine Dicke von 20 bis 300, vorzugsweise von 20 bis 100 µm, aufweist und wobei der Polymerfilm A vorzugsweise eine Dicke von 10 bis etwa 20 µm aufweist.

10. Rohr nach einem der vorstehenden Ansprüche, wobei die Breite des Polymerfilms B größer als die Breite des Polymerfilms A ist

11. Rohr nach einem der vorstehenden Ansprüche, wobei die erste Oberfläche B1 des Polymerfilms B wenigstens einen Hauptteil der äußeren Oberfläche des Rohrs bildet; und/oder
wobei die heißsiegelfähige Oberfläche B2 des Polymerfilms B wenigstens einen Hauptteil der Innenoberfläche des ersten Kanals des Rohrs bildet.

**12.** Rohr nach einem der vorstehenden Ansprüche, wobei ein Teil der zweiten heißsiegelfähigen Oberfläche A2 des Polymerfilms A und ein Teil der zweiten heißsiegelfähigen Oberfläche B2 des Polymerfilms B Innenoberflächen des zweiten Kanals des Rohrs bilden.

**13.** Kit, umfassend einen ersten heißsiegelfähigen Polymerfilm A und einen zweiten heißsiegelfähigen Polymerfilm B, wobei das Kit zum Bilden eines Rohrs geeignet ist, das einen ersten Kanal und einen zweiten Kanal umfasst, wobei sich jeder von dem ersten und dem zweiten Kanal entlang der Längsachse des Rohrs erstreckt, wie in einem der Ansprüche 1 und 2 bis 12, wenn abhängig von Anspruch 1, definiert, wobei:

(i) das Rohr von dem ersten heißsiegelfähigen Polymerfilm A und dem zweiten heißsiegelfähigen Polymerfilm B gebildet ist,
(ii) der Polymerfilm A eine erste Oberfläche A1 und eine zweite heißsiegelfähige Oberfläche A2 aufweist,
(iii) der Polymerfilm B eine erste Oberfläche B1 und eine zweite heißsiegelfähige Oberfläche B2 aufweist,
(iv) der Polymerfilm A Kanten A-a und A-b umfasst und der Polymerfilm B Kanten B-a und B-b umfasst, wobei sich die Kanten A-a, A-b, B-a und B-b entlang der Längsachse des Rohrs erstrecken,
(v) die Polymerfilme A und B so angeordnet sind, dass die heißsiegelfähigen Oberflächen A2 und B2 in Kontakt miteinander stehen und durch Heißsiegelbindungen, die sich nicht über die gesamte Oberfläche der heißsiegelfähigen Oberflächen A2 und B2 erstrecken, aneinander haften,
(vi) der Polymerfilm A durch erste und zweite Überlappungs-Heißsiegelbindungen (HSB1 und HSB2) an den Polymerfilm B gehaftet ist, um das Rohr und den ersten Kanal davon zu definieren, und
(vii) der Polymerfilm A ferner durch eine dritte Heißsiegelbindung (HSB3) zwischen den Heißsiegelflächen A2 und B2 an den Polymerfilm B gehaftet ist, so dass die dritte Heißsiegelbindung einen zweiten Kanal definiert, der eine erste und eine zweite Wand umfasst, die sich entlang der Längsachse des Rohrs erstrecken.

**14.** Verfahren zur Herstellung eines Rohrs aus Polymerfilm nach einem der Ansprüche 1 und 2 bis 12, wenn abhängig von Anspruch 1, wobei das Rohr einen ersten Kanal und einen zweiten Kanal umfasst, wobei sich jeder von dem ersten und dem zweiten Kanal entlang der Längsachse des Rohrs erstreckt, wobei das Verfahren die Schritte umfasst:

(a) Bereitstellen eines ersten heißsiegelfähigen Polymerfilms A und eines zweiten heißsiegelfähigen Polymerfilms B, wobei der Polymerfilm A eine erste Oberfläche A1 und eine zweite heißsiegelfähige Oberfläche A2 aufweist und der Polymerfilm B eine erste Oberfläche B1 und eine zweite heißsiegelfähige Oberfläche B2 aufweist, wobei der Polymerfilm A Kanten A-a und A-b umfasst und der Polymerfilm B Kanten B-a und B-b umfasst,
(b) Anordnen der Polymerfilme A und B derart, dass die heißsiegelfähigen Oberflächen A2 und B2 miteinander in Kontakt stehen, und Anhaften des Polymerfilms A an den Polymerfilm B durch Heißsiegelbindungen, die sich nicht über die gesamte Oberfläche jeder der heißsiegelfähigen Oberflächen A2 und B2 erstrecken, so dass:

(i) erste und zweite Überlappungs-Heißsiegelbindungen gebildet werden, um das Rohr und den ersten Kanal davon zu definieren, und
(ii) eine dritte Heißsiegelbindung zwischen den Heißsiegelflächen A2 und B2 gebildet wird, so dass die dritte Heißsiegelbindung einen zweiten Kanal definiert, der eine erste und eine zweite Wand umfasst, die sich entlang der Längsachse des Rohrs erstrecken,

wobei die Polymerfile A und B so angeordnet sind, dass sich die Kanten A-a, A-b, B-a und B-b entlang der Längsachse des Rohrs erstrecken.

**15.** Verfahren nach Anspruch 14, wobei die Heißsiegelbindungen durch Anwenden von Temperatur und Druck gebildet werden,
und/oder wobei eine entfernbare Trennfolie zwischen der heißsiegelfähigen Oberfläche des Polymerfilms B und der ersten Oberfläche des Polymerfilms A vor Anwendung von Wärme und Druck angeordnet ist, um die Bildung einer Heißsiegelbindung(en) zwischen der heißsiegelfähigen Oberfläche des Polymerfilms B und der ersten Oberfläche des Polymerfilms A zu verhindern.

**16.** Verfahren zum Zuführen einer oder mehrerer injizierbarer Chemikalien zu einem vorbestimmten Ort innerhalb einer Struktur, wobei das Verfahren die Schritte umfasst

(a) Bereitstellen eines Rohrs mit einem ersten Kanal, der sich entlang der Längsachse des Rohrs erstreckt, wobei

(i) das Rohr aus einem ersten heißsiegelfähigen Polymerfilm A und einen zweiten heißsiegelfähigen Polymerfilm B gebildet ist,

(ii) der Polymerfilm A eine erste Oberfläche A1 und eine zweite heißsiegelfähige Oberfläche A2 aufweist,

(iii) der Polymerfilm B eine erste Oberfläche B1 und eine zweite heißsiegelfähige Oberfläche B2 aufweist,

(iv) der Polymerfilm A Kanten A-a und A-b umfasst und der Polymerfilm B Kanten B-a und B-b umfasst, wobei sich die Kanten A-a, A-b, B-a und B-b entlang der Längsachse des Rohrs erstrecken,

(v) die Polymerfilme A und B so angeordnet sind, dass die heißsiegelfähigen Oberflächen A2 und B2 in Kontakt miteinander stehen und durch Heißsiegelbindungen aneinander haften, die sich nicht über die gesamte Oberfläche wenigstens einer der heißsiegelfähigen Oberflächen A2 und B2 erstrecken, und

(vi) der Polymerfilm A durch erste und zweite Überlappungs-Heißsiegelbindungen (HSB1 und HSB2) an dem Polymerfilm B haftet, um das Rohr und den ersten Kanal davon zu definieren;

(b) Leiten eines ersten Fluidstroms, der die injizierbare(n) Chemikalie(en) umfasst, entlang des ersten Kanals zu der vorbestimmten Stelle.

**17.** Verfahren nach Anspruch 16, wobei das Rohr wie in einem der Ansprüche 1 bis 12 definiert ist.

**18.** Verfahren nach Anspruch 16 zum Zuführen einer Mehrzahl von injizierbaren Chemikalien zu einer vorbestimmten Stelle innerhalb einer Struktur, wobei das Verfahren die Schritte umfasst

(a) Bereitstellen eines Rohrs mit einem ersten und einem zweiten Kanal, die sich entlang der Längsachse des Rohrs erstrecken, wobei das Rohr durch einen ersten heißsiegelfähigen Polymerfilm A und einen zweiten heißsiegelfähigen Polymerfilm B gebildet ist, wie in einem der Ansprüche 1 und 2 bis 12, wenn abhängig von Anspruch 1, definiert,

(b) Leiten eines ersten Fluidstroms, der eine erste injizierbare Chemikalie umfasst, entlang des ersten Kanals zu der vorbestimmten Stelle,

(c) Leiten eines zweiten Fluidstroms, der eine zweite injizierbare Chemikalie umfasst, entlang des zweiten Kanals zu der vorbestimmten Stelle,

(d) Mischen des ersten und des zweiten Stroms an der vorbestimmten Stelle.

**19.** Verfahren nach Anspruch 18, ferner umfassend den Schritt des Aufbrechens des ersten heißsiegelfähigen Polymerfilms A an der vorbestimmten Stelle, so dass sich der zweite Fluidstrom in dem zweiten Kanal mit dem ersten Fluidstrom in dem ersten Kanal vermischt, um eine chemische Reaktion zwischen der ersten und der zweiten injizierbaren Chemikalie zu bewirken.

**20.** Verfahren nach einem der Ansprüche 16 bis 19 zum Zuführen von injizierbaren Chemikalie(en) bei Bergbau- und Bauanwendungen, insbesondere Anwendungen ausgewählt sind: Zuführen von injizierbaren Chemikalien zur Verstärkung der Wände eines Bohrlochs, einer Rohrleitung, eines Schachtes oder eines Tunnels; Zuführen von injizierbaren Chemikalien zur Verankerung, Konsolidierung oder Kontrolle von Gasen, Wasser und Schichten an unterirdischen Orten, einschließlich der Konsolidierung von gebrochenen Schichten und/oder Verhinderung des Eindringens von Wasser; und Zuführen von injizierbaren Chemikalien bei Renovierungs- und Bauprojekten, einschließlich der Reparatur oder Füllung von Hohlräumen oder Rissen in einer Struktur; und/oder wobei die injizierbare(n) Chemikalie(en) zu einem vorbestimmten Ort in einem Bohrloch eines Bergbaubetriebs zugeführt werden.

**21.** Verfahren nach einem der Ansprüche 16 bis 20 oder Rohr nach einem der Ansprüche 1 oder 2 bis 12, wenn abhängig von Anspruch 1, oder Kit nach Anspruch 13, wobei das Rohr zum Zuführen eines injizierbaren chemischen Systems mit zwei Komponenten geeignet ist, wobei die beiden Komponenten bis zu ihrem Anwendungspunkt getrennt bleiben müssen, an welchem Punkt die Komponenten in Kontakt gebracht werden, um eine chemische Reaktion zu durchlaufen, um die gewünschte Verbindung an einem vorbestimmten Ort bereitzustellen, gegebenenfalls wobei das injizierbare chemische System ein Zweikomponenten-Polyurethan- oder Silicatharzsystem umfasst oder daraus besteht.

**Revendications**

**1.** Tube comprenant un premier canal et un deuxième canal, dans lequel chacun desdits premier et deuxième canaux s'étend le long de l'axe longitudinal dudit tube, et dans lequel :

(i) ledit tube est constitué d'un premier film polymérique thermoscellable A et d'un deuxième film polymérique thermoscellable B,

(ii) ledit film polymérique A a une première surface A1 et une deuxième surface thermoscellable A2,

(iii) ledit film polymérique B a une première surface B1 et une deuxième surface thermoscellable B2,

(iv) ledit film polymérique A comprend des bords A-a et A-b et ledit film polymérique B comprend des bords B-a et B-b, dans lequel lesdits bords A-a, A-b, B-a et B-b s'étendent le long de l'axe longitudinal du tube,

(v) lesdits films polymériques A et B sont disposés de telle sorte que lesdites surfaces thermoscellables A2 et B2 sont en contact et collées l'une à l'autre par des liaisons par thermoscellement qui ne s'étendent pas sur toute la surface desdites surfaces thermoscellables A2 et B2,

(vi) le film polymérique A est collé au film polymérique B par des première et deuxième liaisons par thermoscellement par chevauchement (HSB1 et HSB2) pour définir ledit tube et ledit premier canal correspondant, et

(vii) le film polymérique A est en outre collé au film polymérique B par une troisième liaison par thermoscellement (HSB3) entre lesdites surfaces thermoscellables A2 et B2 de sorte que ladite troisième liaison par thermoscellement définit un deuxième canal comprenant des première et deuxième parois qui s'étendent le long de l'axe longitudinal dudit tube.

2. Tube selon la revendication 1, dans lequel ledit deuxième canal est défini par ladite troisième liaison par thermoscellement (HSB3) entre la surface thermoscellable adjacente au bord A-a du film A et une partie de la surface thermoscellable B2 qui est située entre les bords B-a et B-b, et par ladite deuxième liaison par thermoscellement (HSB2) entre la surface thermoscellable adjacente au bord B-b du film B et une partie de la surface thermoscellable A2 qui est entre les bords A-a et A-b.

3. Tube selon l'une quelconque des revendications précédentes, dans lequel ladite première surface A1 du film polymérique A et ladite première surface B1 du film polymérique B ne sont pas thermoscellables.

4. Tube selon l'une quelconque des revendications précédentes, dans lequel ledit film polymérique A et ledit film polymérique B sont choisis indépendamment parmi des films comprenant une couche de base et une couche thermoscellable, éventuellement dans lequel ladite couche de base est un polyester comprenant un acide dicarboxylique aromatique et un diol aliphatique, de préférence dans lequel ledit polyester est un poly(téréphtalate d'éthylène).

5. Tube selon l'une quelconque des revendications précédentes, dans lequel ladite couche thermoscellable est :

(a) un copolyester dérivé d'au moins 3 motifs répétitifs monomères, dont au moins un est un acide dicarboxylique aromatique et dont au moins un est un diol aliphatique, éventuellement, dans lequel ledit copolyester est dérivé de :

(i) acide téréphtalique, un deuxième acide dicarboxylique aromatique et l'éthylène glycol, de préférence dans lequel ledit deuxième acide dicarboxylique aromatique est l'acide isophtalique ;

(ii) acide téréphtalique, éthylène glycol et un deuxième diol, de préférence dans lequel ledit deuxième diol est choisi parmi un diol cycloaliphatique, de préférence le 1,4-cyclohexanediméthanol ; ou

(iii) acide téréphtalique, éthylène glycol et un deuxième acide dicarboxylique, de préférence dans lequel ledit deuxième acide dicarboxylique est choisi parmi un acide dicarboxylique aliphatique, de préférence l'acide azélaïque ; ou

(b) formée à partir d'éthylène acétate de vinyle (EVA), ayant de préférence une teneur en acétate de vinyle dans la plage de 9 % à 40 %, et plus préférablement 15 % à 30 %.

6. Tube selon l'une quelconque des revendications précédentes, dans lequel ledit film polymérique A et ledit film polymérique B sont choisis indépendamment parmi des films polymériques orientés biaxialement ; et/ou dans lequel ledit film polymérique A et ledit film polymérique B sont choisis indépendamment parmi des films polymériques coextrudés.

7. Tube selon l'une quelconque des revendications précédentes, dans lequel ledit tube a une largeur de section transversale d'environ 1 cm à environ 500 cm.

8. Tube selon l'une quelconque des revendications précédentes, dans lequel ledit film polymérique A et ledit film polymérique B se chevauchent d'au moins 1 mm pour former ladite ou lesdites liaison(s) par thermoscellement par chevauchement (HSB1 et/ou HSB2).

9. Tube selon l'une quelconque des revendications précédentes, dans lequel ledit film polymérique A et ledit film polymérique B sont choisis indépendamment parmi des films ayant une épaisseur de 10 à 500 µm, de préférence dans lequel ledit film polymérique B a une épaisseur de 20 à 300, de préférence de 20 à 100 µm, et de préférence dans lequel ledit film polymérique A a une épaisseur de 10 à environ 20 µm.

10. Tube selon l'une quelconque des revendications précédentes, dans lequel la largeur dudit film polymérique B est supérieure à la largeur dudit film polymérique A.

11. Tube selon l'une quelconque des revendications précédentes, dans lequel ladite première surface B1 dudit film polymérique B constitue au moins une partie majoritaire de la surface extérieure dudit tube ; et/ou dans lequel ladite surface thermoscellable B2 dudit film polymérique B constitue au moins une partie majoritaire de la surface intérieure dudit premier canal dudit tube.

12. Tube selon l'une quelconque des revendications précédentes, dans lequel une partie de ladite deuxième surface thermoscellable A2 du film polymérique A et une partie de ladite deuxième surface thermoscellable B2 dudit film polymérique B constituent des surfaces intérieures dudit deuxième canal dudit tube.

13. Kit comprenant un premier film polymérique thermoscellable A et un deuxième film polymérique thermoscellable B, dans lequel ledit kit est approprié pour former un tube comprenant un premier canal et un deuxième canal, dans lequel chacun desdits premier et deuxième canaux s'étend le long de l'axe longitudinal dudit tube, tel que défini selon l'une quelconque des revendications 1 et 2 à 12 lorsqu'elles dépendent de la revendication 1, dans lequel :

    (i) ledit tube est constitué dudit premier film polymérique thermoscellable A et dudit deuxième film polymérique thermoscellable B,
    (ii) ledit film polymérique A a une première surface A1 et une deuxième surface thermoscellable A2,
    (iii) ledit film polymérique B a une première surface B1 et une deuxième surface thermoscellable B2,
    (iv) ledit film polymérique A comprend des bords A-a et A-b et ledit film polymérique B comprend des bords B-a et B-b, dans lequel lesdits bords A-a, A-b, B-a et B-b s'étendent le long de l'axe longitudinal du tube,
    (v) lesdits films polymériques A et B sont disposés de telle sorte que lesdites surfaces thermoscellables A2 et B2 sont en contact et collées l'une à l'autre par des liaisons par thermoscellement qui ne s'étendent pas sur toute la surface desdites surfaces thermoscellables A2 et B2,
    (vi) le film polymérique A est collé au film polymérique B par des première et deuxième liaisons par thermoscellement par chevauchement (HSB1 et HSB2) pour définir ledit tube et ledit premier canal correspondant, et
    (vii) le film polymérique A est en outre collé au film polymérique B par une troisième liaison par thermoscellement (HSB3) entre lesdites surfaces thermoscellables A2 et B2 de sorte que ladite troisième liaison par thermoscellement définit un deuxième canal comprenant des première et deuxième parois qui s'étendent le long de l'axe longitudinal dudit tube.

14. Procédé de formation d'un tube de film polymérique tel que défini selon l'une quelconque des revendications 1 et 2 à 12 lorsqu'elles dépendent de la revendication 1, dans lequel ledit tube comprend un premier canal et un deuxième canal, dans lequel chacun desdits premier et deuxième canaux s'étend le long de l'axe longitudinal dudit tube, ledit procédé comprenant les étapes consistant à :

    (a) fournir un premier film polymérique thermoscellable A et d'un deuxième film polymérique thermoscellable B, dans lequel ledit film polymérique A a une première surface A1 et une deuxième surface thermoscellable A2, et ledit film polymérique B a une première surface B1 et une deuxième surface thermoscellable B2, dans lequel ledit film polymérique A comprend des bords A-a et A-b et ledit film polymérique B comprend des bords B-a et B-b,
    (b) disposer lesdits films polymériques A et B de telle sorte que lesdites surfaces thermoscellables A2 et B2 sont en contact l'une avec l'autre, et coller le film polymérique A au film polymérique B par des liaisons par thermoscellement qui ne s'étendent pas sur toute la surface de chacune desdites surfaces thermoscellables A2 et B2, de telle sorte que :

        (i) des première et deuxième liaisons par thermoscellement par chevauchement sont formées pour définir ledit tube et ledit premier canal correspondant, et
        (ii) une troisième liaison par thermoscellement est formée entre lesdites surfaces thermoscellables A2 et B2 de sorte que ladite troisième liaison par thermoscellement définit un deuxième canal comprenant des première et deuxième parois qui s'étendent le long de l'axe longitudinal dudit tube,

    dans lequel lesdits films polymériques A et B sont disposés de telle sorte que les bords A-a, A-b, B-a et B-b s'étendent le long de l'axe longitudinal du tube.

15. Procédé selon la revendication 14, dans lequel lesdites liaisons par thermoscellement sont formées par application de température et de pression, et/ou dans lequel une feuille de libération détachable est disposée entre la surface thermoscellable du film polymérique B et la première surface du film polymérique A avant l'application de chaleur et de pression afin d'éviter la formation de liaison(s) par thermoscellement entre la surface thermoscellable du film polymérique B et la première surface du film polymérique A.

16. Procédé de délivrance d'un ou de plusieurs produits chimiques injectables à un emplacement prédéterminé à l'intérieur d'une structure, ledit procédé comprenant les étapes consistant à

   (a) fournir un tube ayant un premier canal s'étendant le long de l'axe longitudinal dudit tube, dans lequel

   (i) ledit tube est constitué d'un premier film polymérique thermoscellable A et d'un deuxième film polymérique thermoscellable B,
   (ii) ledit film polymérique A a une première surface A1 et une deuxième surface thermoscellable A2,
   (iii) ledit film polymérique B a une première surface B1 et une deuxième surface thermoscellable B2,
   (iv) ledit film polymérique A comprend des bords A-a et A-b et ledit film polymérique B comprend des bords B-a et B-b, dans lequel lesdits bords A-a, A-b, B-a et B-b s'étendent le long de l'axe longitudinal du tube,
   (v) lesdits films polymériques A et B sont disposés de telle sorte que lesdites surfaces thermoscellables A2 et B2 sont en contact et collées l'une à l'autre par des liaisons par thermoscellement qui ne s'étendent pas sur toute la surface d'au moins une desdites surfaces thermoscellables A2 et B2, et
   (vi) un film polymérique A est collé au film polymérique B par des première et deuxième liaisons par thermoscellement par chevauchement (HSB1 et HSB2) pour définir ledit tube et ledit premier canal correspondant ;

   (b) diriger un premier flux de fluide comprenant ledit ou lesdits produit(s) chimique(s) injectable(s) le long dudit premier canal vers ledit emplacement prédéterminé.

17. Procédé selon la revendication 16, dans lequel ledit tube est tel que défini selon l'une quelconque des revendications 1 à 12.

18. Procédé selon la revendication 16 pour délivrer une pluralité de produits chimiques injectables à un emplacement prédéterminé à l'intérieur d'une structure, ledit procédé comprenant les étapes consistant à

   (a) fournir un tube ayant des premier et deuxième canaux s'étendant le long de l'axe longitudinal dudit tube, dans lequel ledit tube est constitué d'un premier film polymérique thermoscellable A et d'un deuxième film polymérique thermoscellable B, tels que définis selon l'une quelconque des revendications 1 et 2 à 12 lorsqu'elles dépendent de la revendication 1,
   (b) diriger un premier flux de fluide comprenant un premier produit chimique injectable le long dudit premier canal vers ledit emplacement prédéterminé,
   (c) diriger un deuxième flux de fluide comprenant un deuxième produit chimique injectable le long dudit deuxième canal vers ledit emplacement prédéterminé,
   (d) mélanger lesdits premier et deuxième flux au niveau dudit emplacement prédéterminé.

19. Procédé selon la revendication 18, comprenant en outre l'étape de rupture dudit premier film polymérique thermoscellable A au niveau dudit emplacement prédéterminé de sorte que ledit deuxième flux de fluide dans ledit deuxième canal se mélange avec ledit premier flux de fluide dans ledit premier canal, causant ainsi une réaction chimique entre lesdits premier et deuxième produits chimiques injectables.

20. Procédé selon l'une quelconque des revendications 16 à 19 pour la délivrance de produit(s) chimique(s) injectable(s) dans des applications minières et de construction, en particulier des applications choisies parmi : délivrance de produits chimiques injectables pour renforcer les parois d'un trou de forage, d'un pipeline, d'un puits ou d'un tunnel ; délivrance de produits chimiques injectables pour ancrer, consolider ou réguler des gaz, de l'eau et des strates dans des emplacements souterrains, y compris pour consolider des strates fracturées et/ou empêcher l'infiltration d'eau ; et pour délivrer des produits chimiques injectables dans des projets de rénovation et de construction, y compris pour réparer ou remplir des cavités ou des fissures dans une structure ; et/ou dans lequel ledit ou lesdits produit(s) chimique(s) injectable(s) sont délivrés à un emplacement prédéterminé dans un trou de forage d'une exploitation minière.

21. Procédé selon l'une quelconque des revendications 16 à 20, ou tube selon l'une quelconque des revendications 1 ou 2 à 12 lorsqu'elles dépendent de la revendication 1, ou un kit selon la revendication 13, dans lequel ledit tube convient à la délivrance d'un système chimique injectable à deux composants, dans lequel les deux composants doivent rester séparés jusqu'à leur point d'application, point auquel les composants sont mis en contact afin de subir une réaction chimique pour fournir le composé souhaité au niveau d'un emplacement prédéterminé, éventuellement, dans lequel ledit système chimique injectable comprend ou est constitué d'un système à deux composants de résine de polyuréthane ou silicate.

FIGURE 1

FIGURE 2

FIGURE 3

FIGURE 4

Figure 5

Figure 6

**REFERENCES CITED IN THE DESCRIPTION**

**Patent documents cited in the description**

- DE 3837121 A1
- WO 2012120260 A
- EP 2108673 A
- US 20090117362 A1
- GB 2024715 A
- GB 1077813 A
- US 4333968 A
- WO 0259186 A

**Non-patent literature cited in the description**

- **HITCHCOCK** ; **HAMMONS** ; **YAU**. The dual-capillary method for modern-day viscometry. *American Laboratory*, August 1994
- **B. WUNDERLICH**. Macromolecular Physics. Academic Press, 1976